# EUROPÄISCHE PATENTSCHRIFT

(11) **EP 1 106 319 B1**
(45) Veröffentlichungstag und Bekanntmachung des Hinweises auf die Patenterteilung: **12.02.2003**
(21) Anmeldenummer: 00125576.9
(22) Anmeldetag: 22.11.2000
(51) Int. Cl.: B29B 9/06

(54) **Kunststoffstranggranulieranlage**
Device for granulating plastic strands
Dispositif pour granuler des joncs de matière plastique

(30) Priorität: 30.11.1999 DE 19957712
(43) Veröffentlichungstag der Anmeldung: 13.06.2001
(73) Patentinhaber: C.F. SCHEER & CIE. GMBH & CO., D-70435 Stuttgart (DE)
(72) Erfinder: Schäfer, Dieter, 74248 Ellhofen (DE)
(74) Vertreter: Klunker . Schmitt-Nilson . Hirsch

(56) Entgegenhaltungen:
- DE-A- 3 302 086
- GB-A- 1 390 614
- US-A- 5 182 115
- US-A- 5 265 507
- US-A- 5 628 947
- US-A- 5 787 604

## Beschreibung

Die Erfindung betrifft eine Kunststoffstranggranulieranlage zum Abkühlen und Granulieren von Strängen aus thermoplastischem Kunststoff, insbesondere auch für glasgefüllte Thermoplaste.

Solche Anlagen sind hinlänglich bekannt und weisen eine mit Kühlflüssigkeit bespülte Transportvorrichtung auf, der die Kunststoffstränge schmelzflüssig zugeführt werden und auf der die Kunststoffstränge unter gleichzeitiger Kühlung einem nachgeordneten Granulator zugeleitet werden. Die mit Kühlflüssigkeit bespülte Transportvorrichtung ist üblicherweise als ein mit Wasser bespültes umlaufendes Band oder als eine wasserbespülte, geneigte, starre Rinne ausgebildet.

Die Kunststoffstränge werden dem Granulator nur in Ausnahmefällen zusammen mit der Kühlflüssigkeit zugeführt. Normalerweise sind zwischen dem Granulator und der Transportvorrichtung ein oder mehrere Zwischenstrecken vorgesehen, auf denen die Kühlflüssigkeit abgeführt und die Kunststoffstränge gegebenenfalls zusätzlich getrocknet werden, bevor sie in den Granulator gelangen. Es ist auch bekannt, solche Zwischenstrecken als Temperaturausgleichsstrecke auszugestalten, in der die Stränge ohne zusätzliche Kühlung oder Trocknung lediglich transportiert werden, so daß die Kunststoffstränge bei ihrer Einführung in den Granulator ein in etwa homogenes Temperaturprofil über ihren Querschnitt besitzen. Eine Temperaturausgleichsstrecke ist insbesondere für die Granulierung von glasgefüllten Kunststoffen wie glasgefülltes Polyamid (PA6, PA6.6), Polycarbonat (PC), Polypropylen (PP), Polyester (PET) erforderlich. Glasgefüllte Produkte kühlen aufgrund des Glasanteils vergleichsweise schnell ab, benötigen daher also nur eine kurze Kühlstrecke, müssen aber über eine lange Temperaturausgleichsstrecke gerührt werden, um das gewünschte homogene Temperaturprofil von über 100°C für die Granulierung zu erhalten. Ist der Kern der Kunststoffstränge zum Zeitpunkt des Granulierens noch weich, so führt dies zu unerwünschten Granulatformen und insbesondere zu erhöhtem Verschleiß der Granuliermesser.

Während glasgefüllte Kunststoffe eine kurze Kühlstrecke und eine lange Temperaturausgleichsstrecke benötigen, bedürfen ungefüllte Thermoplaste einer intensiveren Kühlung, die je nach Produkt unterschiedlich sein kann und insbesondere für Polypropylen (PP) besonders viel Zeit in Anspruch nimmt.

Kunststoffstranggranulieranlagen gibt es nun ungefähr solange, wie es Kunststoffe gibt. Je nach dem zu granulierenden Produkt werden die Anlagen individuell mit den Entwässerungsstrecken, Trocknungsstrecken und Temperaturausgleichsstrecken gewünschter Länge ausgestattet, wobei es insbesondere bekannt ist, einzelne Strecken als austauschbare Module auszubilden.

Aus der US 4,180,539 (Figur 4) ist eine Kunststoffstranggranulieranlage bekannt, die eine als geneigte, wasserbespülte Rinne ausgebildete Kühlstrecke besitzt, welche über einem umlaufenden Siebband endet, auf welchem die Kunststoffstränge weitergeleitet werden zu einem nachfolgenden Granulator. Das Siebband hat hier die Funktion einer Entwässerungs- und Trocknungsstrecke, wobei das Kühlwasser durch das Siebband in einen am Boden stehenden Auffangbehälter tropft und zusätzlich über die gesamte Länge des Siebbandes mit Luft beaufschlagt wird, um die Kunststoffstränge zu trocknen und weiter zu kühlen.

Aus der DE 197 28 661 A1 (Figur 2) ist eine Kunststoffstranggranulieranlage bekannt, bei der zwischen der als geneigte Rinne ausgebildeten, mit Kühlflüssigkeit bespülten Transportvorrichtung und dem Granulator eine modulartig aufgebaute Zwischenstrecke vorgesehen ist. Diese Zwischenstrecke umfaßt einen ersten Teil, der wahlweise als Kühl- oder Trocknungsstrecke ausgebildet sein kann und in dem die Kunststoffstränge auf einem umlaufenden Band gefördert werden, einem daran anschließenden, als Blasstrecke ausgebildeten zweiten Teil, welcher durch ein feststehendes Sieb gebildet wird und durch welches Luft eingesaugt wird, um Restwasser von der Oberfläche der Kunststoffstränge wegzublasen, und eine sich daran anschließende Transportstrecke, in der die Kunststoffstränge frei durch die Luft geführt werden, so daß sie vollständig von Luft umspült sind. Die Transportstrecke ist zum Zwecke der Selbsteinfädelung der Kunststoffstränge in den Granulator als Transportband ausgebildet. Aufgrund des ersten Teils der Zwischenstrecke, auf welche sowohl Sprühdüsen als auch Blasdüsen gerichtet sind, um die Zwischenstrecke wahlweise als Kühl- oder Trocknungsstrecke betreiben zu können, ist die Anlage in Grenzen variabel einsetzbar. Sie ist aber beispielsweise ungeeignet für schlecht wärmeleitende Kunststoffprodukte, die eine besonders lange Kühlstrecke und kurze Trockenstrecke erfordern.

Aufgabe der vorliegenden Erfindung ist es daher, eine Kunststoffstranggranulieranlage der eingangs beschriebenen Art vorzuschlagen, welche struktiv besonders einfach gestaltet ist.

Diese Aufgabe wird erfindungsgemäß durch die Merkmale des Patentanspruchs 1 gelöst. In davon abhängigen Ansprüchen sind vorteilhafte Ausgestaltungen der Erfindung angegeben.

Demnach ist vorgesehen, daß zwischen der vorzugsweise als Rinne ausgebildeten, mit Kühlflüssigkeit bespülten Transportvorrichtung und dem Granulator ein perforiertes oder poröses, feuchtigkeitsdurchlässiges Transportband oder eine Reihe solcher Transportbänder zur Förderung der Kunststoffstränge angeordnet ist, wobei dieses Transportband vorzugsweise als Siebband ausgebildet ist. Über dem Siebband ist eine Befeuchtungsvorrichtung, vorzugsweise in Form von Sprühdüsen, vorgesehen, wobei sich die Befeuchtungsvorrichtung in Transportrichtung in mehrere Befeuchtungsabschnitte gliedert, die individuell oder zumindest in Transportrichtung der Reihe nach aktivierbar sind.

Dadurch läßt sich die Anlage an verschiedenste zu verarbeitende Produkte anpassen. Im Falle der Verarbeitung von reinen Thermoplasten werden aufgrund der notwendigen intensiven Kühlung eine oder mehrere der in Transportrichtung ersten Befeuchtungsabschnitte aktiviert, möglicherweise auch alle Befeuchtungsabschnitte, insbesondere wenn eine Trocknung der Stränge vor dem Granulieren nicht notwendig oder nicht erwünscht ist. Im Falle der Verarbeitung von glasgefüllten Produkten ist dagegen keine zusätzliche Kühlung erforderlich. In diesem Falle wird daher kein Befeuchtungsabschnitt aktiviert, sondern das Transportband dient im wesentlichen nur als Temperaturausgleichstrecke. Mit der erfindungsgemäßen Kunststoffstranggranulieranlage können auch solche Kunststoffe verarbeitet werden, die im Grunde schon weit vor dem Erreichen des Granulators in granulierfähigem Zustand sind, beispielsweise im Falle von relativ schnell abkühlenden Thermoplasten. In diesem Falle werden die Kunststoffstränge, nachdem sie auf das erforderliche Maß abgekühlt wurden, ohne weitere Behandlung über die verbleibende Transportstrecke zum Granulator weitergeleitet, was sich erfahrungsgemäß nicht auf die Qualität des erzeugten Granulats auswirkt. Mittels einem einzigen Transportband oder einer Reihe von Transportbändern, denen eine Befeuchtungsvorrichtung mit mehreren, individuell aktivierbaren Befeuchtungsabschnitten zugeordnet ist, lassen sich somit im wesentlichen alle Kunststoffsorten auf den für den Granulierprozeß erforderlichen Zustand bringen. Das Transportband bzw. die Reihe von Transportbändern ist natürlich dementsprechend länger, als dies bei herkömmlichen Kunststoffstranggranulieranlagen üblich ist.

Das Transportband ist perforiert oder porös und feuchtigkeitsdurchlässig, so daß das von der Befeuchtungsvorrichtung auf das Transportband gesprühte Wasser durch das Transportband hindurch ablaufen kann. Dies ist besonders vorteilhaft in Kombination mit einer Absaugvorrichtung, die unter dem Transportband vorgesehen ist und mit der Luft und an den Kunststoffsträngen anhaftendes Restwasser durch das Transportband, welches vorzugsweise als Siebband ausgebildet ist, abgesaugt wird. Das Absaugen der Feuchtigkeit durch das Transportband hindurch hat den zusätzlichen positiven Nebeneffekt, daß sich die Kunststoffstränge fest an das Transportband anlegen und auf diese Weise gleichmäßig geführt werden. Dieser Vorteil macht sich besonders beim Einfädeln der Kunststoffstränge in den Granulator bemerkbar, wenn eine neue Charge gefahren wird, ist aber auch während des normalen Betriebs der Anlage festzustellen.

Die unter dem Transportband angeordnete Absaugvorrichtung ist entlang der Transportrichtung der Kunststoffstränge variabel einstellbar, abhängig von der Anzahl abgesperrter Wassersprühdüsen. Die Absaugvorrichtung soll so einstellbar sein, daß das Wasser im Anschluß an die letzte auf das Transportband gerichtete Wassersprühdüse von den Kunststoffsträngen abgesaugt werden kann. Entsprechend einer besonderen Ausrührungsform der Erfindung kann die Absaugvorrichtung als Ganzes entlang der Transportrichtung der Kunststoffstränge hinter die Stelle des Transportbandes verlagert werden, auf die die letzte Wassersprühdüse gerichtet ist. Eine andere Ausführungsform sieht vor, daß die Absaugvorrichtung bis zu dieser Stelle teleskopartig verlängerbar ist.

Eine weitere bevorzugte Ausführungsform der Erfindung sieht vor, daß die Absaugvorrichtung genau wie die Befeuchtungsvorrichtung entlang dem Transportband bzw. entlang der Reihe von Transportbändern in mehrere Absaugabschnitte gegliedert ist, wobei diese Abschnitte individuell oder in Transportrichtung der Reihe nach deaktivierbar sind. Befeuchtungsvorrichtungsabschnitte und Absaugvorrichtungsabschnitte sollten nicht gleichzeitig betrieben werden. Vielmehr sollten die Absaugvorrichtungsabschnitte deaktiviert werden, sobald die auf denselben Bereich des Transportbands wirkenden Befeuchtungsvorrichtungsabschnitte aktiviert werden.

Vorzugsweise ist die Absaugvorrichtung mit einer Entwässerungsvorrichtung kombiniert, indem jeder Absaugvorrichtungsabschnitt als einseitig offener Ansaugkasten ausgebildet ist, dessen offene Seite an die Unterseite des porösen Transportbandes angrenzt und der eine Abflußöffnung sowie mindestens eine davon getrennt angeordnete Absaugöffnung besitzt. Die Abflußöffnung ist als Klappe ausgebildet, die unter einer Vorspannung, beispielsweise durch ein Federelement, steht, welches die Klappe im Normalfall im geschlossenen Zustand hält. Die Schließkraft erhöht sich automatisch, wenn über eine an die Absaugöffnung angeschlossene Saugleitung ein Unterdruck in dem Ansaugkasten erzeugt wird, wenn nämlich durch den Ansaugkasten Restwasser von den Kunststoffsträngen abgesaugt wird. Andererseits öffnet die Klappe der Abflußöffnung selbsttätig, sobald die auf ihr lastende Wassersäule eine bestimmte Höhe übersteigt. Dies ist regelmäßig dann der Fall, wenn der in dem Bereich des Ansaugkasten liegende Befeuchtungsvorrichtungabschnitt aktiviert ist und kein Unterdruck in dem Ansaugkasten erzeugt wird. In diesem Falle fungiert der Ansaugkasten allein als Entwässerungsvorrichtung.

Zusätzlich zu den Befeuchtungsvorrichtungsabschnitten können zumindest im Breich des dem Granulator zugewandten Endes des Transportbandes Blasvorrichtungsabschnitte vorgesehen sein, die ebenfalls individuell oder in Transportrichtung der Reihe nach deaktivierbar sind. Sie dienen zur beschleunigten Trocknung der Kunststoffstränge und werden deaktiviert, wenn in dem betreffenden Bereich des Transportbands Befeuchtungsvorrichtungsabschnitte aktiviert sind. Die Blasvorrichtungsabschnitte werden bevorzugt nur gleichzeitig mit Absaugvorrichtungsabschnitten aktiviert, um eine Nebelbildung über dem Transportband durch aufgewirbelte Feuchtigkeit zu vermeiden.

Die mit Kühlflüssigkeit bespülte Transportvorrichtung ist vorzugsweise als geneigte Rinne ausgebildet, welche vorzugsweise mit ihrem Ablaufende über dem Transportband endet. Auf diese Weise kann die Rinne als einfaches Bauelement ausgeführt werden ohne besondere integrierte Einrichtungen wie Entwässerungs- und/oder Trocknungsabschnitte. Vielmehr wird die Kühlflüssigkeit mit den Kunststoffsträngen auf das Transportband geleitet und fließt aufgrund der Porosität des Transportbandes zumindest zu einem wesentlichen Teil durch das Transportband hindurch ab.

Die bevorzugte Ausführungsform der Erfindung sieht vor, daß zwischen dem Transportband und dem Granulator keine weiteren Elemente zur thermischen Beeinflussung der Kunststoffstränge vorhanden sind, sondern daß sich an das Transportband der Granulator im wesentlichen unmittelbar anschließt. Das schließt nicht aus, daß am Ende des Transportbandes eine mit dem Transportband zusammenwirkende Abzugswalze oder ein separates Abzugswalzenpaar vorgesehen ist, um eine zuverlässige Zuführung der Kunststoffstränge zum Granulator zu gewährleisten.

Dennoch kann es zur abschließenden Trocknung der Kunststoffstränge sinnvoll sein, dem Transportband einen Absaugrost mit auf den Absaugrost gerichteten Blasdüsen nachzuordnen. Diese als Modul ausgebildete Einrichtung kann im Ausnahmefall zwischen Transportband und Granulator eingesetzt werden, wenn die Kühlstrecke über ihre volle Länge genutzt wird und der verbleibende Teil des Transportbands zur effektiven Trocknung nicht ausreicht.

Vorteilhafterweise ist das Transportband aufwärts geneigt, so daß die Bauhöhe der Kunststoffstranggranulieranlage (einschließlich Extruder und Granulator) selbst bei vergleichsweise langer Bauweise in erträglichen Grenzen gehalten werden kann.

Um den sicheren Transport der Kunststoffstränge entlang eines aufwärts geneigten Transportbands sicherzustellen, wird vorteilhafterweise eine Rolle lose auf das Transportband und die damit transportierten Kunststoffstränge aufgelegt. Diese Rollen nimmt einen Gleichgewichtszustand in etwa am unteren Ende des Transportbands ein und drückt die zu transportierenden Kunststoffstränge aufgrund ihres Gewichts auf das Transportband. Alternativ können die Kunststoffstränge auch zwischen dem Transportband und einer angetriebenen, an dem der Rinne zugewandten Ende des Transportbandes angeordneten Transportwalze aktiv befördert werden. Versuche haben jedoch gezeigt, daß auf die lose aufgelegte Rolle oder die angetriebene Transportwalze am unteren Ende des Transportbandes im Bedarfsfall auch verzichtet werden kann, ohne daß die Funktionsfähigkeit der Kunststoffstranggranulieranlage dadurch grundlegend beeinträchtigt wird.

Darüber hinaus ist vorgesehen, daß die Kunststoffstränge von dem Transportband in einer abgewinkelten Richtung so weitertransportiert werden, daß der Kontakt der Kunststoffstränge mit dem Transportband sichergestellt ist.

Nachfolgend wird die Erfindung anhand der anhängenden Zeichnungen beispielhaft beschrieben. Darin zeigen:
Figur 1 eine Kunststoffstranggranulieranlage gemäß der vorliegenden Erfindung mit lose aufgelegter Rolle,
Figur 2 die Kunststoffstranggranulieranlage gemäß Figur 1 mit aktiver Transportwalze anstelle der lose aufgelegten Rolle,
Figur 3 die Kunststoffstranggranulieranlage gemäß Figur 2 mit Absaugeinrichtung und Gebläse zwischen Transportband und Granulator, und
Figur 4 eine bevorzugte Ausführungsform der erfindungsgemäßen Kunststoffstranggranulieranlage mit in Abschnitte untergliederten Befeuchtungsvorrichtung, Blasvorrichtung und Absaugvorrichtung.

Die Merkmale der in den Figuren dargestellten Ausführungsformen können auch in anderer Kombination einsetzbar sein.

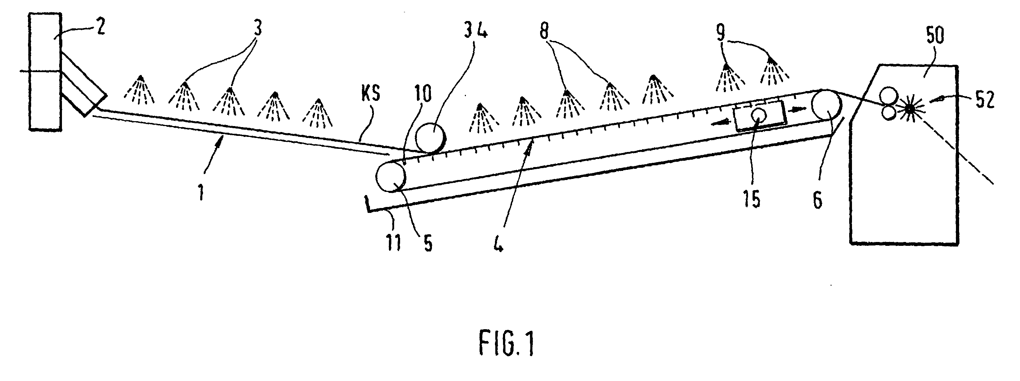

In Figur 1 ist eine Kunststoffstranggranulieranlage dargestellt, bei der aus dem Extruder 2 Kunststoffstränge KS austreten und auf eine abwärts geneigte, wasserbespülte Rinne bzw. Ablaufrinne 1 auftreffen. Auf die wasserbespülte Ablaufrinne 1 sind zusätzlich Kühlwassersprühdüsen 3 gerichtet. Die Kunststoffstränge KS werden mit dem Wasserstrom in der Ablaufrinne 1 in Richtung eines nachgeordneten Granulators 50 gefördert und gleichzeitig gekühlt. Dabei kühlen die Kunststoffstränge soweit ab, daß sie zumindest an ihrer Oberfläche hart werden.

Unter dem unteren Ende der Ablaufrinne 1 beginnt ein nach aufwärts gerichtetes Transportband 10, auf das die Kunststoffstränge KS auftreffen und mit dem die Kunststoffstränge KS dem nachfolgenden Granulator 50 zur Pelletierung mittels der Messerwalze 52 zugeführt werden. Die Transportwalzen 5, 6 treiben das Transportband 10 in umlaufender Richtung an, und eine lose aufgelegte Rolle 34 stellt sicher, daß die Kunststoffstränge KS auf der Oberfläche des Transportbands 10 tatsächlich aufliegen, damit sie vom Transportband sicher erfaßt und befördert werden können.

Das Transportband 10 ist perforiert, so daß Wasser durch das Transportband 10 hindurchtreten kann. Das mit den Kunststoffsträngen KS von der Ablaufrinne 1 auf das Transportband 10 auftreffende Wasser kann dadurch einerseits durch das Transportband hindurch abfließen, andererseits ist die Kühlwassermenge der Ablaufrinne 1 derart hoch, daß ein Abfließen auch über die Oberfläche des Transportbands 10 erfolgen wird. Das abgeflossene Wasser wird in jedem Falle von einer unter dem Transportband 10 angeordneten Wasserauffangwanne 11 aufgefangen.

Der untere Bereich des Transportbands 10, auf den die Kunststoffstränge KS von der Ablaufrinne 1 auftreffen, ist als Kühlstrecke ausgebildet, indem Wassersprühdüsen 8 auf das Transportband 10 gerichtet sind. Die von der Ablaufrinne 1 kommenden und vom Kühlwasser der Ablaufrinne 1 bereits im wesentlichen befreiten Kunststoffstränge KS werden mittels den Sprühdüsen 8 mit frischem Kühlwasser besprüht, wodurch eine effektive weitere Kühlung der Kunststoffstränge KS erreicht wird.

Die Wassersprühdüsen 8 können einzeln gesperrt werden, wodurch sich der im Bereich des Transportbands befindliche Teil der Kühlstrecke variieren läßt. Dadurch wird die flexible Einsetzbarkeit der Kunststoffstranggranulieranlage wesentlich verbessert.

Durch das Absperren beispielsweise der beiden rechten Wassersprühdüsen 8 der fünf in Figur 1 dargestellten Wassersprühdüsen 8 vergrößert sich gleichzeitig die Strecke zum Granulator 50, in der die Kunststoffstränge KS getrocknet werden können oder einem Temperaturausgleich überlassen werden können. Zur Trocknung der Kunststoffstränge KS sind Blasluftdüsen 9 auf das Transportband 10 gerichtet. In der in Figur 1 dargestellten Ausführungsform der Erfindung sind Wassersprühdüsen 8 und Blasluftdüsen 9 in Gruppen nacheinander angeordnet. Es können aber auch Wassersprühdüsen 8 und Blasluftdüsen 9 jeweils abwechselnd auf das Transportband 10 gerichtet sein, so daß sich im Falle einzeln absperrbarer Düsen eine optimale Flexibilität für den Einsatz der Kunststoffstranggranulieranlage ergibt. Dann kann im Extremfall das gesamte Transportband entweder als Kühlstrecke oder als Trocknungsstrecke oder als Temperaturausgleichstrecke fungieren.

Unter dem umlaufenden, perforierten Transportband 10 ist eine Absaugvorrichtung 15 vorgesehen, mit der die Trocknungswirkung auf die Kunststoffstränge unterstützt wird. Diese Absaugvorrichtung 15 ist variabel, so daß sie an den jeweiligen Betriebszustand der Kunststoffstranggranulieranlage angepaßt werden kann, der davon abhängt, welche Wassersprühdüsen 8 abgesperrt sind. Denn die Absaugvorrichtung 15 sollte vorzugsweise in Transportrichtung der Kunststoffstränge direkt hinter der letzten aktiven Wassersprühdüse 8 angeordnet werden, um möglichst frühzeitig möglichst viel Kühlwasser von den Kunststoffsträngen abzusaugen. Dazu kann die Absaugvorrichtung 15 beispielsweise teleskopartig in Richtung zur Ablaufrinne 1 ausziehbar sein. Sie kann aber auch als einsteckbarer Absaugkasten ausgebildet sein, der je nach Betriebsweise der Kunststoffstranggranulieranlage unter verschiedenen Stellen des Transportbands 10 eingesteckt werden kann.

Das Transportband 10 wird über eine Bandentwässerungseinrichtung 4 geführt, an der das durch das perforierte Transportband abfließende Wasser abgestreift wird und von der das abgestreifte Wasser abtropfen kann.

Am oberen Ende des Transportbands 10 werden die Kunststoffstränge KS nach unten abgewinkelt dem Granulator 50 zur Pelletierung zugeführt, so daß ein Kontakt der Kunststoffstränge KS mit dem Transportband 10 über die gesamte transportierende Länge des Transportbands 10 sichergestellt ist.

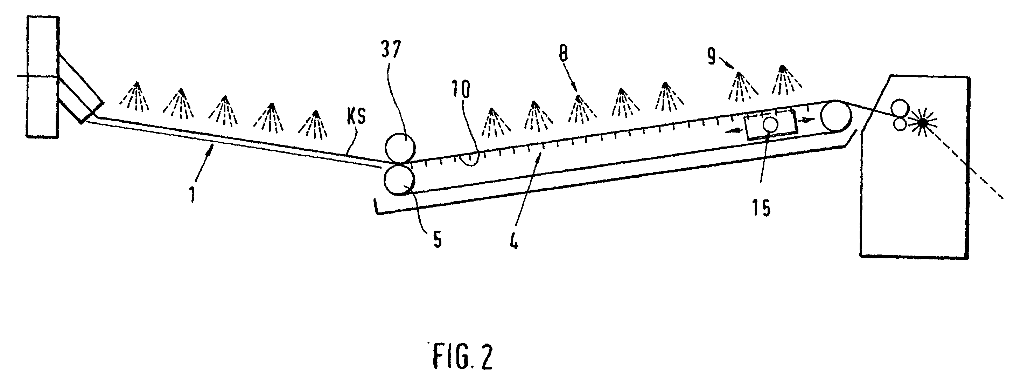

In Figur 2 ist eine andere Ausführungsform der Erfindung dargestellt, die sich von der in Figur 1 dargestellten Ausführungsform dadurch unterscheidet, daß anstelle der lose aufgelegten Rolle 34 eine angetriebene Transportwalze 37 mit dem umlaufenden Transportband 10 so zusammenwirkt, daß die Kunststoffstränge KS zwischen der Transportwalze 37 und dem Transportband 10 zwangsgeführt werden. Dadurch wird der Transportvorgang insbesondere beim Anfahren der Kunststoffstranggranulieranlage zuverlässiger und automatisierbar.

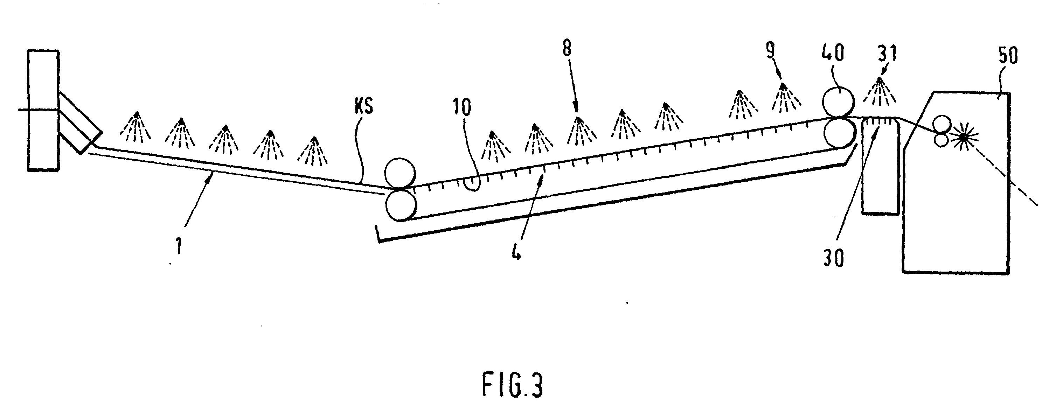

In Figur 3 ist eine weitere Ausgestaltung der in Figur 2 dargestelten Ausführungsform der Erfindung gezeigt. Zwischen dem oberen Ende des Transportbands 10 und dem Eintritt der Kunststoffstränge KS in den Granulator 50 ist eine weitere Absaugvorrichtung 30 und eine darauf gerichtete weitere Blasluftdüse 31 vorgesehen, um die Trocknung der Kunststoffstränge KS weiter zu erhöhen. Dieses Modul bestehend aus Absaugvorrichtung 30 und Blasluftdüse 31 kann im Bedarfsfall zwischen das Transportband 10 und den verschieblich gelagerten Granulator 50 eingesetzt werden, wenn sich beispielsweise herausstellt, daß beim Betrieb der Kunststoffstranggranulieranlage mit maximaler Kühlstrecke (alle Wassersprühdüsen 8 sind aktiv) die verbleibende Trocknungsstrecke mit den Blasluftdüsen 9 nicht ausreicht. Das Modul bestehend aus Absaugvorrichtung 30 und Blasluftdüse 31 kann dann als Ersatz für die variable, unter das Transportband 10 einsteckbare Absaugvorrichtung 15 vorgesehen werden, die in der in Figur 3 dargestellten Ausführungsform dementsprechend fehlt.

Eine zusätzliche Transportwalze 40 am oberen Ende des Transportbands 10 stellt im Zusammenwirken mit dem Transportband 10 sicher, daß die Kunststoffstränge über weitere Absaugvorrichtungen 30 zuverlässig dem Granulator 50 zugeführt werden.

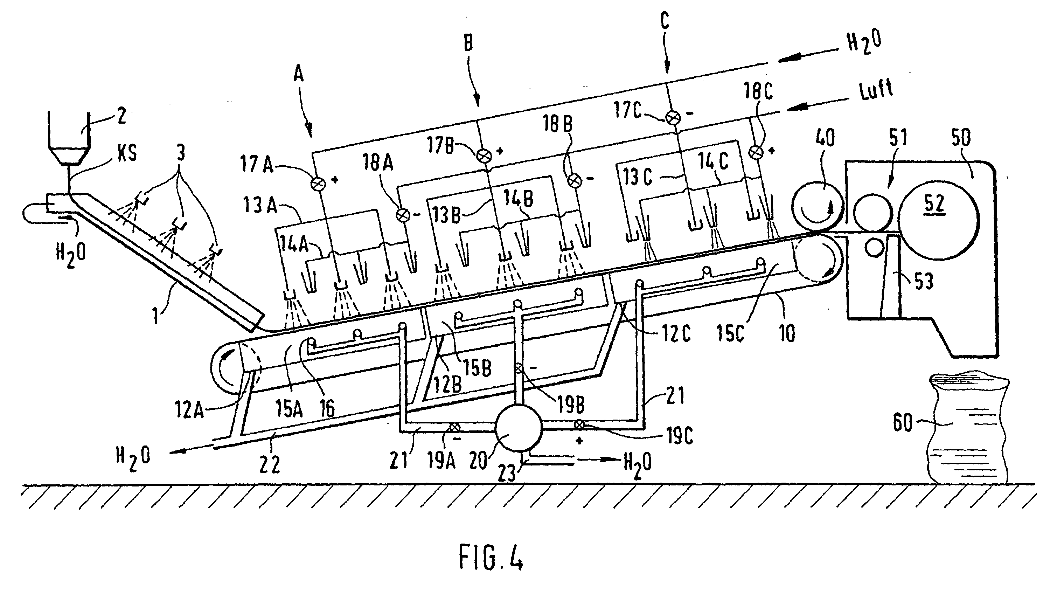

Die Figur 4 zeigt eine besonders bevorzugte Ausführungsform der erfindungsgemäßen Kunststoffstranggranulieranlage. Diese Anlage besitzt ebenfalls eine schräge, mit Wasser (H₂O) bespülte Rinne 1, der Kunststoffstränge KS aus einem Extruder 2 in schmelzflüssigem Zustand zugeleitet werden. Durch den Wasserstrom werden die Kunststoffstränge KS der Neigung der Rinne 1 folgend transportiert und gleichzeitig gekühlt. Sprühdüsen 3 können zur zusätzlichen Kühlung von oben auf die Rinne 1 gerichtet werden.

Das untere, dem Granulator 50 zugewandte Ende der Rinne 1 endet über einem in Pfeilrichtung umlaufenden Siebband 10, welches für Wasser und Luft durchlässig ist. Die Kunststoffstränge KS werden mittels dem umlaufenden Siebband 10 weiter in Richtung zum Granulator 50 transportiert. Statt eines einzigen Siebbandes 10 können auch mehrere in Reihe geschaltete Siebbänder 10 eingesetzt werden. Am Ende des Siebbands 10 werden die Kunststoffstränge KS mittels einer Vorschubwalze 40, die mit der Oberfläche des Siebbandes 10 zusammenwirkt und einen Förderspalt für die Kunststoffstränge KS bildet, dem Granulator 50 zugeleitet, wo die Kunststoffstränge KS zunächst von einem Einzugswalzenpaar 51 weiter gefördert werden, bevor sie mittels einer mit einem Amboßmesser 53 zusammenwirkenden Messerwalze 52 in Kunststoffpellets granuliert werden. Das Granulat wird in einen Behälter, beispielsweise einen Sack 60, abgefüllt.

Das Transportband 10 ist in einzelne Abschnitte gegliedert, in dem in der Figur 4 dargestellten Ausführungsbeispiel konkret in drei Abschnitte A, B, C. Alle Abschnitte A, B, C sind prinzipiell gleich aufgebaut und setzen sich zusammen aus jeweils einer Gruppe von Sprühdüsen 13A bzw. 13B bzw. 13C, einer Gruppe von Blasdüsen 14A bzw. 14B bzw. 14C und einem Absaugkasten 15A bzw. 15B bzw. 15C. Die eingangs genannten Befeuchtungsvorrichtungsabschnitte werden durch die Gruppen von Sprühdüsen 13A, 13B, 13C gebildet. Entsprechend werden die Blasvorrichtungsabschnitte und die Absaugvorrichtungsabschnitte von den Blasdüsengruppen 14A, 14B, 14C bzw. den Absaugkästen 15A, 15B, 15C gebildet.

Während die Sprühdüsen 13A, 13B, 13C und die Blasdüsen 14A, 14B, 14C von oben auf das Transportband 10 gerichtet sind, um die darauf transportierten Kunststoffstränge KS entweder durch Beaufschlagung mit einer Kühlflüssigkeit weiter zu kühlen oder um gegebenenfalls durch Beaufschlagung mit Blasluft an den Kunststoffsträngen KS anhaftende Restfeuchtigkeit abzublasen, sind die Absaugkästen 15A, 15B, 15C auf der gegenüberliegenden Seite des Transportbands 10 unmittelbar angrenzend an die Unterseite des oberen Trums des Transportbands 10 angeordnet, um Feuchtigkeit von den Kunststoffsträngen KS durch das Transportband 10 hindurch abzusaugen. Zu diesem Zweck besitzt jeder Absaugkasten 15A, 15B, 15C ein oder mehrere Absaugöffnungen 16, durch die über Saugleitungen 21 mittels eines Ventilators 20 ein Unterdruck in den Absaugkästen erzeugt wird. Die Absaugkästen sind zum Siebband 10 hin offen, so daß der Unterdruck durch das Siebband 10 hindurch auf die Kunststoffstränge KS und die von den Kunststoffsträngen mitgeführte Feuchtigkeit wirkt.

Die Absaugkästen 15A, 15B, 15C sind entsprechend der Neigung des Transportbandes 10 geneigt. An ihrer tiefsten Stelle besitzt jeder Absaugkasten 15A, 15B, 15C eine Klappe 12A bzw. 12B bzw. 12C. Diese Klappen sind durch ein nicht dargestelltes Federelement vorgespannt und befinden sich daher normalerweise in dem in der Figur dargestellten geschlossenen Zustand. Sobald in einem Absaugkasten ein gewisser Wasserpegel erreicht ist, dessen Wassersäule ausreicht, um die Federvorspannung zu überwinden, entwässert der betreffende Absaugkasten durch die entsprechende Entwässerungsklappe und die Abflußleitung 22 in ein nicht dargestelltes Reservoir. Alternativ kann auch eine senkrecht hängende Klappe vorgesehen werden, die durch ihr Eigengewicht ohne Federkraft schließt und durch einen gewissen Wasserdruck aus der Senkrechten ausgelenkt wird, so daß das Wasser abfließen kann. Bei Anlegen eines Unterdrucks wird die Klappe dagegen gegen einen Anschlag gezogen, so daß sie in der senkrechten Schließposition fixiert ist.

Die Befeuchtigungsvorrichtungsabschnitte 13A, 13B, 13C, Blasvorrichtungsabschnitte 14A, 14B, 14C und Absaugvorrichtungsabschnitte 15A, 15B, 15C sind jeweils separat aktivierbar und deaktivierbar. Dies kann beispielsweise mit Hilfe einer Computersteuerung erfolgen, die einfache Schließventile 17A bis 17C, 18A bis 18C, 19A bis 19C, beispielsweise Magnetventile, öffnet und schließt. Die einzelnen Abschnitte müssen nicht notwendigerweise alle individuell regelbar sein. Allerdings sollten zumindest die Befeuchtungsvorrichtungsabschnitte in Transportrichtung der Reihe nach aktivierbar sein, um die Kühlstrecke entsprechend zu verlängern oder zu verkürzen. Dementsprechend sollten die Blasvorrichtungsabschnitte und die Absaugvorrichtungsabschnitte zumindest in Transportrichtung der Reihe nach deaktivierbar sein, da diese Abschnitte deaktiviert sein müssen, wenn die entsprechenden Befeuchtungsvorrichtungsabschnitte aktiviert sind. Es ist allerdings nicht notwendig, daß Blasvorrichtungsabschnitte und die zugehörigen Absaugvorrichtungsabschnitte grundsätzlich gemeinsam aktiviert oder deaktiviert sind.

Die in Figur 4 dargestellte Kunststoffstranggranulieranlage ist in einem Zustand gezeigt, bei dem die in Transportrichtung ersten beiden Befeuchtungsvorrichtungsabschnitte 13A und 13B aktiviert sind, indem die zugehörigen Ventile 17A, 17B für den Durchfluß von Wasser (H₂O) geöffnet sind. Dies ist in der Figur jeweils mit einem Pluszeichen gekennzeichnet. In den Abschnitten A und B werden die Kunststoffstränge KS mittels Sprühdüsen von oben befeuchtet. In denselben Abschnitten A und B sind die Blasdüsen 14A, 14B deaktiviert, indem die zugehörigen Ventile 18A, 18B geschlossen sind. Dies ist in der Figur mit einem Minuszeichen gekennzeichnet. Gleichzeitig sind auch die Absaugvorrichtungsabschnitte 15A, 15B deaktiviert, indem die zugeordneten Ventile 19A, 19B geschlossen sind, was ebenfalls jeweils durch ein Minuszeichen angedeutet ist. In den Abschnitten A, B fließt das von den Sprühdüsen aufgebrachte Kühlwasser durch das Siebband 10 hindurch in die hier lediglich als Entwässerungsvorrichtung wirkenden Absaugkästen 15A, 15B hinein und durch die Entwässerungsklappen 12A und 12B sowie Abflußleitung 22 in das nicht dargestellte Kühlflüssigkeitsreservoir.

Im in Transportrichtung nachfolgenden Abschnitt C sind die Sprühdüsen 13C deaktiviert, indem das zugehörige Ventil 17C geschlossen ist, wie durch das Minuszeichen angedeutet. Statt dessen sind in diesem Abschnitt C sowohl die Blasdüsen 14C als auch der Absaugkasten 15C aktiviert, indem die zugehörigen Ventile 18C und 19C des Blasvorrichtungsabschnitts 14C bzw. Absaugvorrichtungsabschnitts 15C geöffnet sind. Den Kunststoffsträngen wird in diesem Abschnitt C anhaftende Restfeuchtigkeit durch kombiniertes Blasen und Saugen durch das Transportband 10 hindurch entzogen und über die Saugleitung 21 abgeführt. Wasser (H₂O) wird über einen Abscheider 23 abgeschieden.

Das Abblasen und Absaugen von Flüssigkeit ist aufgrund der konvektiven Luftströmung regelmäßig auch mit einer weiteren Abkühlung der Kunststoffstränge verbunden. In Fällen, bei denen der Abschnitt C lediglich als Temperaturausgleichsstrecke fungiert, kann daher zumindest auf die Aktivierung der Blasdüsen 14C und gegebenenfalls auch auf die Aktivierung des Absaugkastens 15C verzichtet werden.

## Patentansprüche

1. Kunststoffstranggranulieranlage mit einer mit Kühlflüssigkeit bespülten Transportvorrichtung (1), der die Kunststoffstränge (KS) schmelzflüssig zugeführt werden und auf der die Kunststoffstränge (KS) unter gleichzeitiger Kühlung einem nachgeordneten Granulator (50) zugeleitet werden, wobei zwischen dem Granulator (50) und der kühlflüssigkeitbespülten Transportvorrichtung (1) zumindest ein Transportband (10) oder eine Reihe von Transportbändern (10) zur Förderung der Kunststoffstränge (KS) angeordnet ist und wobei entlang dem Transportband (10) bzw. der Reihe von Transportbändern (10) eine Befeuchtungsvorrichtung (13) zur weiteren Kühlung der Kunststoffstränge (KS) vorgesehen ist, **dadurch gekennzeichnet, daß** das Transportband (10) bzw. die Reihe von Transportbändern (10) perforiert oder porös und feuchtigkeitsdurchlässig ist und daß sich die Befeuchtungsvorrichtung (13) in Transportrichtung der Kunststoffstränge in mehrere Befeuchtungsvorrichtungsabschnitte (13A, 13B, 13C) gliedert, die individuell oder in Transportrichtung der Reihe nach aktivierbar sind.

2. Kunststoffstranggranulieranlage nach Anspruch 1, **dadurch gekennzeichnet, daß** entlang dem Transportband (10) bzw. der Reihe von Transportbändern (10) eine Absaugvorrichtung (15) vorgesehen ist, mit welcher ein Unterdruck auf der den Kunststoffsträngen (KS) gegenüberliegenden Seite des Transportbandes bzw. der Reihe von Transportbändern (10) erzeugbar ist, um den Kunststoffsträngen (KS) anhaftende Feuchtigkeit durch das Transportband bzw. die Transportbänder (10) abzusaugen.

3. Kunststoffstranggranluieranlage nach Anspruch 2, **dadurch gekennzeichnet, daß** die Absaugvorrichtung (15) entlang der Transportrichtung der Kunststoffstränge variabel einstellbar ist.

4. Kunststoffstranggranulieranlage nach Anspruch 3, **dadurch gekennzeichnet, daß** die Absaugvorrichtung (15) einen Absaugkasten umfaßt, der entlang der Transportrichtung der Kunststoffstränge verlagerbar ist.

5. Kunststoffstranggranulieranlage nach Anspruch 3 oder 4, **dadurch gekennzeichnet, daß** die Absaugvorrichtung entlang der Transportrichtung der Kunststoffstränge teleskopartig verlagerbar ist.

6. Kunststoffstranggranulieranlage nach Anspruch 3, **dadurch gekennzeichnet, daß** sich die Absaugvorrichtung (15) in Transportrichtung in mehrere Absaugvorrichtungsabschnitte (15A, 15B, 15C) gliedert, welche individuell oder in Transportrichtung der Reihe nach deaktivierbar sind.

7. Kunststoffstranggranulieranlage nach Anspruch 6, **dadurch gekennzeichnet, daß** die Absaugvorrichtung (15) mit einer Entwässerungsvorrichtung kombiniert ist, indem jeder Absaugvorrichtungsabschnitt (15A, 15B, 15C) einen einseitig offenen Absaugkasten umfaßt, dessen offene Seite an die Unterseite des Transportbandes (10) angrenzt und der eine unter Vorspannung stehende Entwässerungsklappe (12) sowie mindestens eine davon getrennt angeordnete Absaugöffnung (16) zum Anschluß an eine Saugleitung (21) besitzt, wobei die Entwässerungsklappe (12) ab einer die Vorspannung übersteigenden Wassersäule selbstätig öffnet.

8. Kunststoffstranggranulieranlage nach einem der Ansprüche 1 bis 7, **dadurch gekennzeichnet, daß** entlang dem Transportband (10) bzw. der Reihe von Transportbändern (10) eine Blasvorrichtung (14) vorgesehen ist, mit welcher eine Luftströmung auf die Kunststoffstränge (KS) gerichtet wird, wobei sich die Blasvorrichtung (14) in Transportrichtung in mehrere Blasvorrichtungsabschnitte (14A, 14B, 14C) gliedert, welche individuell oder in Transportrichtung der Reihe nach deaktivierbar sind.

9. Kunststoffstranggranulieranlage nach einem der Ansprüche 1 bis 8, **dadurch gekennzeichnet, daß** die mit Kühlflüssigkeit bespülte Transportvorrichtung (1) als geneigte Rinne ausgebildet ist.

10. Kunststoffstranggranulieranlage nach einem der Ansprüche 1 bis 5, **dadurch gekennzeichnet, daß** das granulatorseitige Ende der Transportvorrichtung (1) über dem Transportband (10) bzw. einem Transportband der Reihe von Transportbändern (10) endet.

11. Kunststoffstranggranulieranlage nach Anspruch 10, **dadurch gekennzeichnet, daß** die Kühlflüssigkeit der bespülten Transportvorrichtung (1) zusammen mit den Kunststoffsträngen (KS) auf das Transportband (10) geleitet wird.

12. Kunststoffstranggranulieranlage nach einem der Ansprüche 1 bis 11, **dadurch gekennzeichnet, daß** das Transportband bzw. die Transportbänder (10) als umlaufendes Siebband ausgebildet sind.

13. Kunststoffstranggranulieranlage nach einem der Ansprüche 1 bis 12, **dadurch gekennzeichnet, daß** sich an das Transportband (10) bzw. die Gruppe von Transportbändern (10) unmittelbar der Granulator (50) anschließt.

14. Kunststoffstranggranulieranlage nach einem der Ansprüche 1 bis 12, **dadurch gekennzeichnet, daß** zwischen dem Granulator (50) und dem dem Granulator zugewandten Ende des Transportbandes (10) bzw. am Ende des in Transportrichtung letzten Transportbandes der Reihe von Transportbändern (10) eine weitere Absaugvorrichtung (30) und auf die weitere Absaugvorrichtung gerichtete Blasdüse (31) vorgesehen sind.

15. Kunststoffstranggranulieranlage nach einem der Ansprüche 1 bis 14, **gekennzeichnet durch** eine Abzugswalze (40) oder ein Abzugswalzenpaar am Ende des Transportbandes (10) bzw. am Ende des in Transportrichtung letzten Transportbandes der Reihe von Transportbändern (10).

16. Kunststoffstranggranulieranlage nach einem der Ansprüche 1 bis 15, **dadurch gekennzeichnet, daß** das Transportband (10) aufwärts gerichtet ist und eine Rolle (34) lose auf die mit dem Transportband geförderten Kunststoffstränge aufgelegt wird.

17. Kunststoffstranggranulieranlage nach einem der Ansprüche 1 bis 16, **dadurch gekennzeichnet, daß** eine Transportwalze (34) an dem der Transportvorrichtung (1) zugewandten Ende des Transportbands (10) im Zusammenwirken mit dem Transportband (10) zur aktiven Förderung der Kunststoffstränge (KS) vorgesehen ist.

18. Kunststoffstranggranulieranlage nach einem der Ansprüche 1 bis 17, **dadurch gekennzeichnet, daß** die Kunststoffstränge (KS) von dem Transportband (10) bzw. von dem letzten Transportband der Reihe von Transportbändern (10) derart abgewinkelt weitertransportiert werden, daß ein Kontakt der Kunststoffstränge (KS) mit dem Transportband (10) sichergestellt ist.

## Claims

1. A plastic strand pelletizer having a transport apparatus (1) rinsed with cooling liquid to which the plastic strands (*KS*) are supplied in molten form and on which the plastic strands (*KS*) are passed to a subsequent pelletizer (50) while being simultaneously cooled, at least one transport belt (10) or a series of transport belts (10) for conveying the plastic strands (*KS*) being disposed between the pelletizer (50) and the cooling liquid-rinsed transport apparatus (1), and a moistening apparatus (13) being provided along the transport belt (10) or series of transport belts (10) for further cooling the plastic strands (*KS*), **characterized in that** the transport belt (10) or series of transport belts (10) is perforated or porous and moisture-permeable, and the moistening apparatus (13) is divided in the transport direction of the strands into a plurality of moistening apparatus sections (13*A*, 13*B*, 13*C*) which are activable individually or one after the other in the transport direction.

2. A plastic strand pelletizer according to claim 1, **characterized in that** a suction apparatus (15) is provided along the transport belt (10) or series of transport belts (10) for producing a vacuum on the side of the belt or series of belts (10) opposite the strands (KS) in order to suck moisture adhering to the strands (*KS*) through the belt or belts (10).

3. A plastic strand pelletizer according to claim 2, **characterized in that** the suction apparatus (15) is variably adjustable along the transport direction of the strands.

4. A plastic strand pelletizer according to claim 3, **characterized in that** the suction apparatus (15) comprises a suction box which is displaceable along the transport direction of the strands.

5. A plastic strand pelletizer according to claim 3 or 4, **characterized in that** the suction apparatus is displaceable telescopically along the transport direction of the strands.

6. A plastic strand pelletizer according to claim 3, **characterized in that** the suction apparatus (15) is divided in the transport direction into a plurality of suction apparatus sections (15*A*, 15*B*, 15*C*) which are deactivable individually or one after the other in the transport direction.

7. A plastic strand pelletizer according to claim 6, **characterized in that** the suction apparatus (15) is combined with a draining apparatus by each suction apparatus section (15*A*, 15*B*, 15*C*) comprising a suction box open on one side whose open side adjoins the lower side of the transport belt (10) and which has a biased draining flap (12) and at least one suction opening (16) disposed separately therefrom for connection to a suction pipe (21), the draining flap (12) opening automatically as of a water column exceeding the bias.

8. A plastic strand pelletizer according to any of claims 1 to 7, **characterized in that** a blowing apparatus (14) is provided along the transport belt (10) or series of transport belts (10) for directing an air flow onto the strands (*KS*), the blowing apparatus (14) being divided in the transport direction into a plurality of blowing apparatus sections (14*A*, 14*B*, 14*C*) which are deactivable individually or one after the other in the transport direction.

9. A plastic strand pelletizer according to any of claims 1 to 8, **characterized in that** the transport apparatus (1) rinsed with cooling liquid is formed as an inclined trough.

10. A plastic strand pelletizer according to any of claims 1 to 5, **characterized in that** the end of the transport apparatus (1) on the pelletizer side ends above the transport belt (10) or one transport belt in the series of transport belts (10).

11. A plastic strand pelletizer according to claim 10, **characterized in that** the cooling liquid of the rinsed transport apparatus (1) is passed onto the transport belt (10) together with the strands (*KS*).

12. A plastic strand pelletizer according to any of claims 1 to 11, **characterized in that** the transport belt or transport belts (10) are formed as circulating mesh belts.

13. A plastic strand pelletizer according to any of claims 1 to 12, **characterized in that** the transport belt (10) or group of transport belts (10) is followed directly by the pelletizer (50).

14. A plastic strand pelletizer according to any of claims 1 to 12, **characterized in that** a further suction apparatus (30) and a blast nozzle (31) directed onto said further suction apparatus are provided between the pelletizer (50) and the end of the transport belt (10) facing the pelletizer or at the end of the last transport belt of the series of transport belts (10) in the transport direction.

15. A plastic strand pelletizer according to any of claims 1 to 14, **characterized by** a draw-off roll (40) or a pair of draw-off rolls at the end of the transport belt (10) or at the end of the last transport belt of the series of transport belts (10) in the transport direction.

16. A plastic strand pelletizer according to any of claims 1 to 15, **characterized in that** the transport belt (10) is directed upwardly and a roll (34) is placed loosely on the strands conveyed with the transport belt.

17. A plastic strand pelletizer according to any of claims 1 to 16, **characterized in that** a transport roll (34) is provided at the end of the transport belt (10) facing the transport apparatus (1) in cooperation with the transport belt (10) for actively conveying the strands (*KS*).

18. A plastic strand pelletizer according to any of claims 1 to 17, **characterized in that** the strands (*KS*) are transported further by the transport belt (10) or the last transport belt of the series of transport belts (10) in bent fashion so as to ensure contact of the strands (*KS*) with the transport belt (10).

## Revendications

1. Dispositif de granulation de jonc ou barre en matière plastique, le dispositif comprenant un organe de transport (1) balayé par un liquide de refroidissement, auquel organe, les joncs de matière plastique (KS) sont amenés en fusion et sur lequel organe les joncs de matière plastique (KS) sont conduits à un appareil de granulation (50) placé en aval tout en étant refroidi, au moins une bande transporteuse (10) ou une rangée de bande transporteuse (10) étant disposée entre l'organe de granulation (50) et l'organe de transport (1) balayé par un liquide de refroidissement pour le transport des joncs de matière plastique (KS) et un organe d'humidification (13) étant prévu le long de la bande transporteuse (10) ou de la rangée de bandes transporteuses (10) pour assurer un refroidissement supplémentaire des joncs en matière plastique (KS), **caractérisé en ce que** la bande transporteuse (10) ou la rangée de bandes transporteuses (10) est perforée ou poreuse et perméable à l'humidité et **en ce que** l'organe d'humidification (13) est subdivisé, dans le direction de transport des joncs en matière plastique, en plusieurs tronçons (13A, 13B, 13C) de l'organe d'humidification qui sont susceptibles d'être activés individuellement ou dans la direction de transport de la rangée.

2. Dispositif de granulation de jonc ou barre en matière plastique, selon la revendication 1, **caractérisé en ce que**, le long de la bande transporteuse (10) ou de la rangée de bandes transporteuses (10) est prévu un organe d'aspiration (15), par l'intermédiaire duquel est susceptible d'être créé sur la face de la bande transporteuse ou de la rangée de bandes transporteuses opposée aux joncs en matière plastique (KS), un vide, afin d'aspirer à travers la bande transporteuse ou les bandes transporteuses (10), l'humidité adhérant aux joncs en matière plastique (KS).

3. Dispositif de granulation de jonc ou barre en matière plastique, selon la revendication 2, **caractérisé en ce que** l'organe d'aspiration (15) est réglable de façon variable le long de la direction de transport des joncs en matière plastique.

4. Dispositif de granulation de jonc ou barre en matière plastique, selon la revendication 3, **caractérisé en ce que** l'organe d'aspiration (15) comporte un boîtier d'aspiration, qui est mobile le long de la direction de transport des joncs en matière plastique.

5. Dispositif de granulation de jonc ou barre en matière plastique, selon la revendication 3 ou 4, **caractérisé en ce que** l'organe d'aspiration est mobile de façon télescopique le long de la direction de transport des joncs en matière plastique.

6. Dispositif de granulation de jonc ou barre en matière plastique, selon la revendication 3, **caractérisé en ce que** l'organe d'aspiration (15) est subdivisé, dans la direction de transport, en plusieurs tronçons (15A, 15B, 15C) d'organe d'aspiration, ses tronçons étant susceptibles d'être désactivés individuellement ou selon la direction de transport de la rangée.

7. Dispositif de granulation de jonc ou barre en matière plastique, selon la revendication 6, **caractérisé en ce que** l'organe d'aspiration (15) est combiné à un organe de dessiccation, dans lequel chaque tronçon (15A, 15B, 15C) de l'organe d'aspiration comportant un boîtier d'aspiration ouvert d'un seul côté et dont la face ouverte est contigüe à la face inférieure de la bande transporteuse (10) et qui comprend un clapet (12) d'évacuation de l'eau placée sous contrainte ainsi qu'au moins une ouverture d'aspiration (16) disposée de façon séparée dudit clapet pour le raccordement à une conduite d'aspiration (21), le clapet (12) d'évacuation de l'eau s'ouvrant automatiquement dès que la hauteur de la colonne d'eau dépasse ladite précontrainte.

8. Dispositif de granulation de jonc ou barre en matière plastique, selon l'une des revendications 1 à 7, **caractérisé en ce qu'**il est prévu le long de la bande transporteuse (10) ou de la rangée de bandes transporteuses (10), un organe de soufflage (14), par l'intermédiaire duquel un courant d'air est dirigé sur les joncs en matière plastique (KS), cet organe de soufflage (14) étant subdivisé dans la direction de transport, en plusieurs tronçons (14A, 14B, 14C) de l'organe de soufflage, qui sont susceptibles d'être désactivés individuellement ou selon la direction de transport de la rangée.

9. Dispositif de granulation de jonc ou barre en matière plastique, selon l'une des revendications 1 à 8, **caractérisé en ce que** l'organe de transport (1) balayé par le liquide de refroidissement est réalisé sous la forme d'une goulotte inclinée.

10. Dispositif de granulation de jonc ou barre en matière plastique, selon l'une des revendications 1 à 5, **caractérisé en ce que** l'extrémité de l'organe de transport (1), du côté de l'organe de granulation se termine sur la bande de transport (10) ou sur une bande de transport de la rangée des bandes de transport (10).

11. Dispositif de granulation de jonc ou barre en matière plastique, selon la revendication 10, **caractérisé en ce que** le liquide de refroidissement de l'organe de transport (1) balayé, est conduit avec les joncs en matière plastique (KS) sur la bande de transport (10).

12. Dispositif de granulation de jonc ou barre en matière plastique, selon l'une des revendications 1 à 11, **caractérisé en ce que** la ou les bande(s) transporteuse(s) (10) est (sont) réalisée(s) sous la forme d'une bande de tamis mobile et tournante.

13. Dispositif de granulation de jonc ou barre en matière plastique, selon l'une des revendications 1 à 12, **caractérisé en ce que** l'organe de granulation (50) suit directement la bande transporteuse (10) ou la rangée de bandes transporteuses (10).

14. Dispositif de granulation de jonc ou barre en matière plastique, selon l'une des revendications 1 à 12, **caractérisé en ce qu'**entre l'organe de granulation (50) et l'extrémité de la bande transporteuse (10) tournée vers l'organe de granulation ou l'extrémité de la dernière bande transporteuse de la rangée de bandes transporteuses (10) sont prévus un organe d'aspiration supplémentaire (30) et une tuyère de soufflage supplémentaire (31) dirigée sur l'organe d'aspiration supplémentaire.

15. Dispositif de granulation de jonc ou barre en matière plastique, selon l'une des revendications 1 à 14, **caractérisé par** un cylindre d'extraction (40) ou un couple de cylindre d'extraction à l'extrémité de la bande transporteuse (10) ou à l'extrémité, dans la direction de transport, de la dernière bande transporteuse de la rangée de bandes transporteuses (10).

16. Dispositif de granulation de jonc ou barre en matière plastique, selon l'une des revendications 1 à 15, **caractérisé en ce que** la bande transporteuse (10) est orientée montante et **en ce qu'**un rouleau (34) tournant librement (monté fou) est posée sur les joncs en matière plastique transportés par la bande transporteuse.

17. Dispositif de granulation de jonc ou barre en matière plastique, selon l'une des revendications 1 à 16, **caractérisé en ce qu'**un rouleau de transport (34) placé à l'extrémité de la bande transporteuse (10) tournée vers l'organe de transport (1) coopère avec la bande transporteuse (10) pour assurer le transport actif des joncs en matière plastique (KS).

18. Dispositif de granulation de jonc ou barre en matière plastique, selon l'une des revendications 1 à 17, **caractérisé en ce que** les joncs en matière plastique (KS) sont transportés plus loin depuis la bande transporteuse (10) depuis la dernière bande transporteuse de la rangée de bandes transporteuses (10) selon un chemin coudé, de sorte qu'un contact des joncs en matière plastique (KS) avec la bande transporteuse (10) soit assuré.
